# EUROPEAN PATENT APPLICATION

(11) **EP 2 918 477 A1**
(43) Date of publication of application: **16.09.2015**
(21) Application number: 14182611.5
(22) Date of filing: 28.08.2014
(51) Int. Cl.: B62D 5/04, B62D 3/12, F16H 25/22

(54) **Steering device**

(30) Priority: 10.03.2014 JP 2014046070
(71) Applicant: Showa Corporation, Gyoda City Saitama 361-8506 (JP)
(72) Inventor: Tajima, Yukio, Haga-gun, Tochigi 321-3315 (JP)
(74) Representative: Schulz, Oliver Frank Michael

(57) **Abstract**

A steering device (1) includes: a steering shaft (8); a transmission member (25) that transmits torque of a motor to the steering shaft; an accommodation member (10) that accommodates the steering shaft and the transmission member (25); and a support member (30) provided in the accommodation member and that supports the transmission member, in which the accommodation member includes a first accommodation member (11, 11A, 12B) and a second accommodation member (12, 12A, 11B) that are integrated by a fastening member (B), the support member (30) is provided in the first accommodation member, a fastening portion (15a) through which the fastening member (B) passes is formed in the first accommodation member (11, 11A, 12B) , and the fastening portion (15a) overlaps an entire length of the support member (30) in an axial direction of the steering shaft.

## Description

### BACKGROUND

### 1. Technical Field

The present invention relates to a steering device.

### 2. Related Art

In a steering device disclosed in Patent Literature 1 (JP-A-2005-343396) and Patent Literature 2 (JP-A-2007-112245), torque of a motor is transmitted to a steering shaft to assist steering of a driver. In such a steering device, torque of a motor is transmitted to a steering shaft via a drive pulley connected to an output shaft of the motor, a belt, a driven pulley, and a ball screw.

In the steering device, the drive pulley, the belt, the driven pulley, and the ball screw are accommodated in a housing together with the steering shaft, and the nut of the ball screw is rotatably supported by a bearing (support member) provided in the housing.

Here, the housing can be divided by a surface that crosses an axial direction of the steering shaft (the crossing angle may or may not be 90°), and the housing is fastened by a fastening member such as a bolt so as to be integrated after a ball screw or the like is accommodated.

### SUMMARY OF INVENTION

However, when the driven pulley rotates, the driven pulley itself shakes outward in a radial direction. Thus, the shaking of the driven pulley may act on the bearing via the ball screw, and an opening may be formed in the dividing surface of the housing.

Moreover, the fastening member may be increased in order to suppress the occurrence of an opening, but this may limit the layout of a vehicle and is not desirable.

The present invention has been made to solve such a problem and an object thereof is to provide a steering device capable of suppressing the occurrence of an opening in a dividing surface of a housing.

An aspect of the present invention provides a steering device including: a steering shaft; a transmission member that transmits torque of a motor to the steering shaft; an accommodation member that accommodates the steering shaft and the transmission member; and a support member provided in the accommodation member and supports the transmission member, in which the accommodation member includes a first accommodation member and a second accommodation member that are integrated by a fastening member, the support member is provided in the first accommodation member, a fastening portion through which the fastening member passes is formed in the first accommodation member, and the fastening portion overlaps an entire length of the support member in an axial direction of the steering shaft.

According to the steering device of the aspect of the present invention, the fastening portion covers (overlaps) an entire portion (the entire length of the support member) in the axial direction of the support member. Due to this, the opening amount of the first and second accommodation members decreases.

So, it is possible to provide a steering device capable of suppressing the occurrence of an opening of a dividing surface of a housing.

### BRIEF DESCRIPTION OF DRAWINGS

FIG. 1 is a rear view of a steering device according to a first embodiment;
FIG. 2 is a cross-sectional view along arrow A-A of FIG. 1;
FIG. 3 is a cross-sectional view along arrow C-C of FIG. 2;
FIG. 4 is a rear view of a steering device according to a second embodiment;
FIG. 5 is a cross-sectional view illustrating an accommodation space of the steering device according to the second embodiment;
FIG. 6 is a cross-sectional view illustrating an accommodation space of a steering device according to a third embodiment; and
FIG. 7A is a diagram for describing the length of a fastening portion according to Example and Comparative Example and FIG. 7B is a table illustrating measurement results of an opening amount according to Example and Comparative Example.

### DESCRIPTION OF EMBODIMENTS

First to third embodiments of a steering device according to the present invention will be described with reference to the drawings. In the first to third embodiments, the same constituent elements are denoted by the same reference numerals.

### <First Embodiment>

A steering device 1 is a device that is mounted on a vehicle so as to steer a steered wheel of the vehicle.

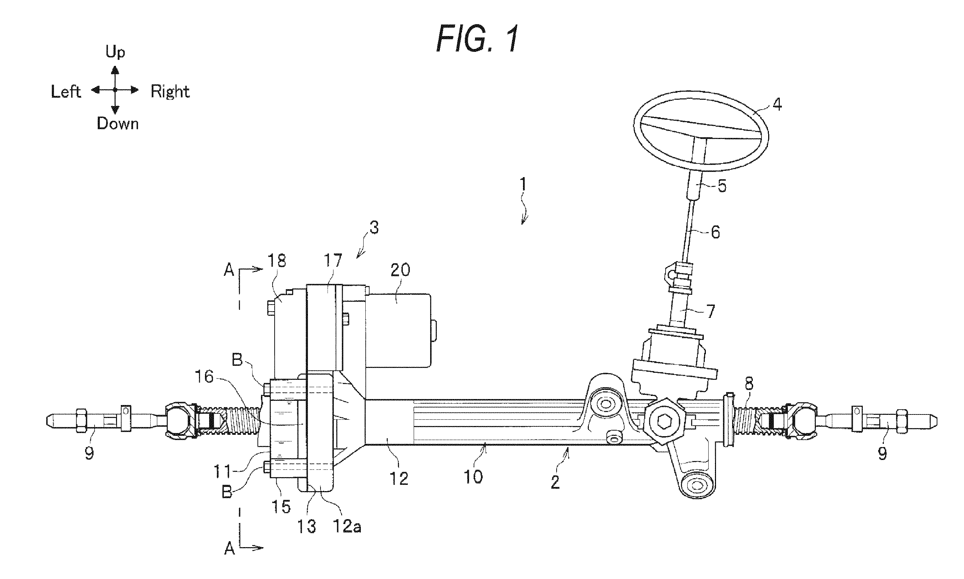

As illustrated in FIG. 1, the steering device 1 is a rack assisted steering device including a steering mechanism 2 that has a rack shaft (steering shaft) 8 extending in a left-right direction and an auxiliary torque mechanism 3 disposed on one end side of the rack shaft 8.

Hereinafter, in the left-right direction in which the rack shaft 8 extends, one end side on which the auxiliary torque mechanism 3 is disposed will be referred to a left side and the other end side will be referred to as a right side.

The steering mechanism 2 includes a steering wheel 4 that a driver manipulates, a steering shaft 5 that rotates integrally with the steering wheel 4, a torsion bar 6 connected to a lower end of the steering shaft 5, a pinion shaft 7 that is connected to a lower end of the torsion bar 6 and has a pinion (not illustrated) at a lower end thereof, a rack shaft 8 that includes a rack (not illustrated) meshing with the pinion, tie rods 9 connected to both ends of the rack shaft 8, and a housing (accommodation member) 10.

When the steered wheel is connected to the tie rods 9 and a driver rotates the steering wheel 4, the rack shaft 8 moves to the left or right side, and the driver can steer the steered wheel.

The housing 10 is a cylindrical member extending in the left-right direction and includes a gear case (first accommodation member) 11 and a gear housing (second accommodation member) 12 that are integrated by bolts (fastening members) B.

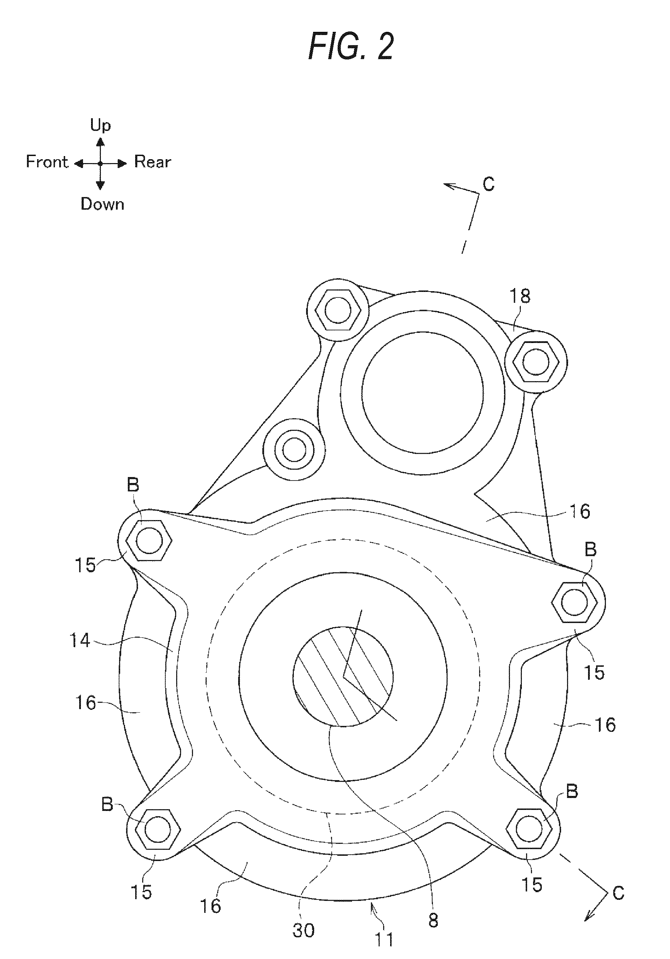

In the present embodiment, four bolts are used for fastening the gear case 11 and the gear housing 12 (see FIG. 2) in the same manner as the conventional art.

As illustrated in FIG. 1, the gear housing 12 is a long member that extends toward the right side from near the auxiliary torque mechanism 3. Moreover, the gear case 11 is a member that is disposed on the left side of the gear housing 12 and is short in the left-right direction. Since the gear case 11 and the gear housing 12 are integrated by the bolts B, a dividing surface 13 that crosses the rack shaft 8 is formed in a left portion of the housing 10.

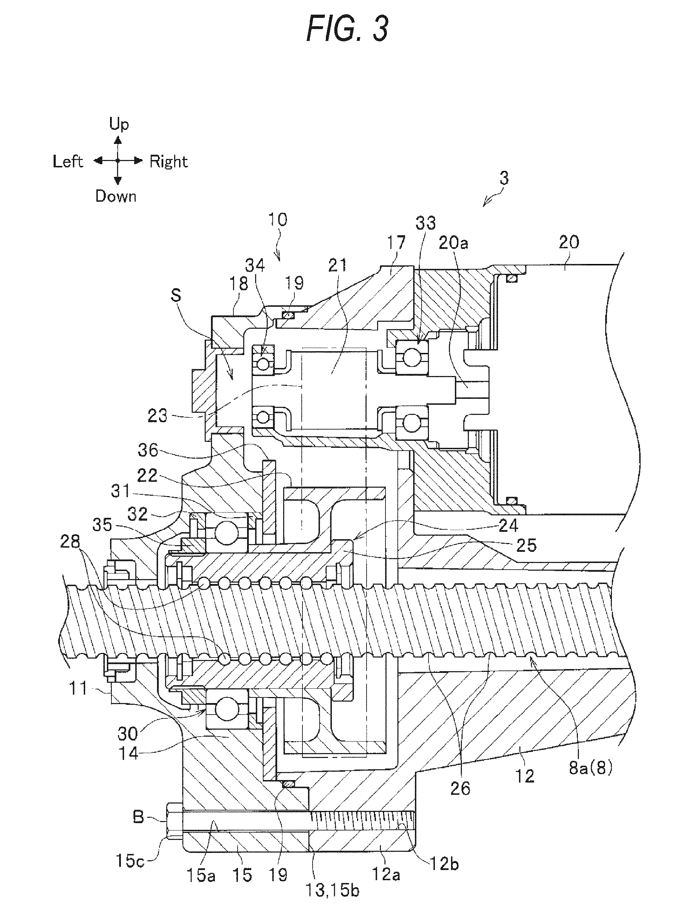

As illustrated in FIG. 3, the dividing surface 13 forms a step shape in a radial direction of the housing 10. Further, an O-ring is interposed in the dividing surface 13. Due to this, water can rarely enter into the housing 10 from the dividing surface 13.

Moreover, a central portion of the right end surface of the gear case 11 and a central portion of the left end surface of the gear housing 12 which constitute the dividing surface 13 are depressed. An accommodation space S that accommodates the components of the auxiliary torque mechanism 3 is formed between the gear case 11 and the gear housing 12 that are integrated.

Moreover, the gear case 11 has an annular peripheral wall portion 14 that surrounds a perimeter of the inserted rack shaft 8, and an outer ring of a first bearing (support member) 30 is internally fitted to the peripheral wall portion 14.

The first bearing 30 is a radial bearing (for example, a four-point-contact ball bearing) and is a support member provided in the gear case 11 so as to rotatably support a ball screw 24 (described later) of the auxiliary torque mechanism 3.

The outer ring of the first bearing 30 is clamped by annular spacers 31 and 32 from the left-right direction, and a fixing ring 36 is in contact with the right side of the spacer 31. Thus, the first bearing 30 is restricted in relation to the gear case 11 so as not to be displaced in the left-right direction.

Moreover, a motor fixing portion 17 is provided above the left end portion of the gear housing 12, and a motor 20 (described later) of the auxiliary torque mechanism 3 is attached to the motor fixing portion 17.

A junction portion 18 that is joined to the motor fixing portion 17 is provided above the right end portion of the gear case 11, and the accommodation space S formed between the gear case 11 and the gear housing 12 extends between the motor fixing portion 17 and the junction portion 18.

The auxiliary torque mechanism 3 is a mechanism for transmitting torque of the motor 20 to the rack shaft 8 to assist steering of the driver.

The auxiliary torque mechanism 3 includes the motor 20 which is fixed to the motor fixing portion 17 and in which an output shaft 20a extends in the accommodation space S, a drive pulley 21 which is connected to the output shaft 20a and of which both ends are supported by second and third bearings 33 and 34, a ball screw 24 connected to the rack shaft 8, a driven pulley 22 that is externally fitted to the ball screw 24, and a belt 23 that is extended between the drive pulley 21 and the driven pulley 22.

The ball screw 24 is a transmission member that converts a rotational motion of the driven pulley 22 into a linear motion in the left-right direction to transmit torque of the motor 20 to the rack shaft 8. The ball screw 24 includes a nut 25, a screw shaft 8a having a screw groove 26 formed therein, and a plurality of steel balls 28.

The screw shaft 8a is a portion of the rack shaft 8.

The nut 25 extends in the left-right direction, and the driven pulley 22 is fitted to an outer circumferential surface on the right side of the nut 25. On the other hand, the left end of the nut 25 extends closer to the left side than the dividing surface 13 and is internally fitted to an inner ring of the first bearing 30. The nut 25 is rotatably supported by the first bearing 30.

Moreover, the driven pulley 22 that is externally fitted to the nut 25 is in contact with the right side of the inner ring of the first bearing 30, and a fixing nut 35 that screws with the left end portion of the nut 25 is in contact with the left side of the inner ring of the first bearing 30. Due to this, the nut 25 is restricted in relation to the first bearing 30 so as not to be displaced in the left-right direction.

According to the auxiliary torque mechanism 3 described above, when the output shaft 20a rotates with the driving of the motor 20, the drive pulley 21 rotates. The rotational motion of the drive pulley 21 is transmitted to the driven pulley 22 by the belt 23, and the driven pulley 22 rotates. Moreover, when nut 25 rotates together with the driven pulley 22, force acts on the screw shaft 8a so that the screw shaft 8a moves toward the left or right side, whereby movement of the rack shaft 8 in the left-right direction is assisted.

Next, a fixing structure for fixing the gear case 11 and the gear housing 12 using the bolts B will be described.

As illustrated in FIG. 1, a flange 12a that extends in a circumferential direction along an outer circumferential surface of the gear housing 12 is provided on the outer circumferential surface in the left end portion of the gear housing 12. Moreover, as illustrated in FIG. 3, female screw holes 12b with which the bolts B screw are formed in the flange 12a.

On the other hand, fastening portions 15 through which the bolts B pass are formed in the outer circumferential surface in the right end portion of the gear case 11.

As illustrated in FIG. 2, the fastening portions 15 extend outward in the radial direction of the rack shaft 8 from the peripheral wall portion 14 of the gear case 11. Due to this, as illustrated in FIG. 3, the fastening portions 15 are continuous with the peripheral wall portion 14 to which the first bearing 30 is internally fitted.

A right end surface 15b of the fastening portion 15 is in contact with the flange 12a of the gear housing 12 to form the dividing surface 13.

On the other hand, a left end surface 15c of the fastening portion 15 is disposed closer to the left side than the first bearing 30 while extending over the first bearing 30 disposed on the inner side in the radial direction. Due to this, the fastening portion 15 overlaps the entire length of the first bearing 30 in the axial direction, and an opening amount of the dividing surface 13 of the housing 10 decreases.

Overlap means that the fastening portion 15 and the first bearing 30 overlap each other when seen from the radial direction of the rack shaft 8.

Moreover, a through-hole 15a that passes in the left-right direction is formed in the fastening portion 15, and the bolt B passes through the fastening portion 15 when the bolt B is inserted into the through-hole 15a.

As illustrated in FIG. 2, four fastening portions 15 are formed so as to correspond to four bolts B.

The four fastening portions 15 are provided so as to be divided in four directions of an upper front side, a lower front side, an upper rear side, and a lower rear side about the rack shaft 8 so that the four fastening portion 15 surround the first bearing 30.

Moreover, a circular arc portion 16 is formed in a portion of the gear case 11 between adjacent fastening portions 15. Due to this, the fastening portion 15 and the circular arc portion 16 are alternately disposed on the outer circumferential surface in the right end portion of the gear case 11 to form a continuous surface that is continuous in the circumferential direction.

The continuous surface formed by the fastening portion 15 and the circular arc portion 16 is in contact with the entire circumference of the flange 12a of the gear housing 12. Thus, water can rarely enter into the accommodation space S via the dividing surface 13.

The thickness (the length in the left-right direction) of the circular arc portion 16 is smaller than that of the fastening portion 15, and the weight of the gear case 11 is reduced.

According to the steering device 1 of the first embodiment, it is possible to decrease the opening amount of the dividing surface 13 of the housing 10 without increasing the number of bolts B.

While the first embodiment has been described, the present invention is not limited to the example described in the first embodiment. For example, although the steering device 1 of the first embodiment is a rack assisted steering device, the present invention is not limited to this, and the steering device 1 may be a steer-by-wire steering device.

Moreover, although the auxiliary torque mechanism 3 of the first embodiment is a belt mechanism that uses the drive pulley 21, the driven pulley 22, and the belt 23 in order to transmit the torque of the motor 20 to the nut 25, the present invention is not limited to this. For example, a chain mechanism that uses a sprocket and a chain and a gear mechanism that uses a pinion and a gear may be used.

Moreover, in the first embodiment, although the first bearing 30 is provided in the gear case 11, the present invention is not limited to this, and the first bearing 30 may be provided in the gear housing 12.

Further, although the motor 20 of the first embodiment is attached to the gear housing 12 in which the motor fixing portion 17 is provided, the present invention is not limited to this, and the motor 20 may be attached to the gear housing 12.

Further, although the motor 20 of the first embodiment is attached to the gear housing 12 in which the first bearing 30 is not provided, the present invention is not limited to this, and both the first bearing 30 and the motor 20 may be provided in the gear case 11 or the gear housing 12.

Hereinafter, a case where both the first bearing 30 and the motor 20 are provided in the gear case 11 and a case where both the first bearing 30 and the motor 20 are provided in the gear housing 12 will be described.

### <Second Embodiment>

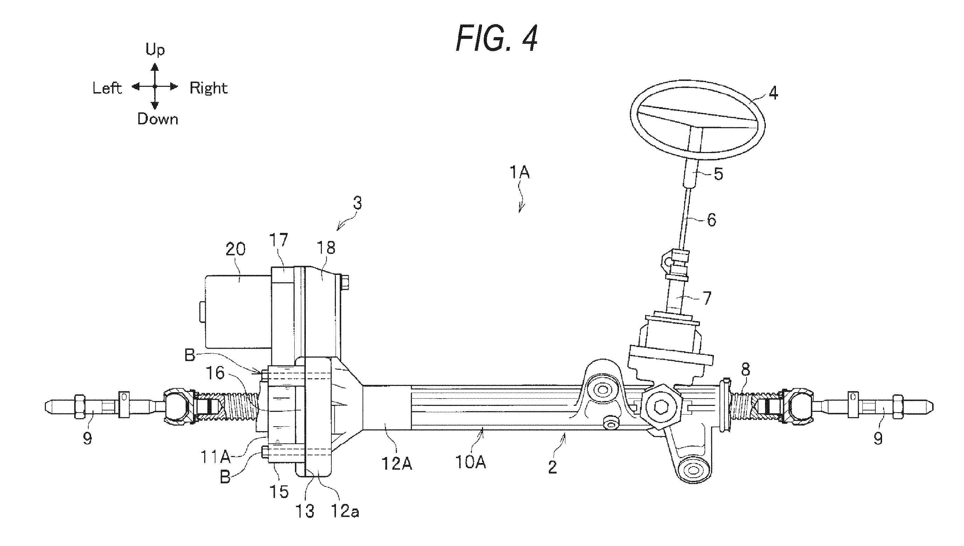

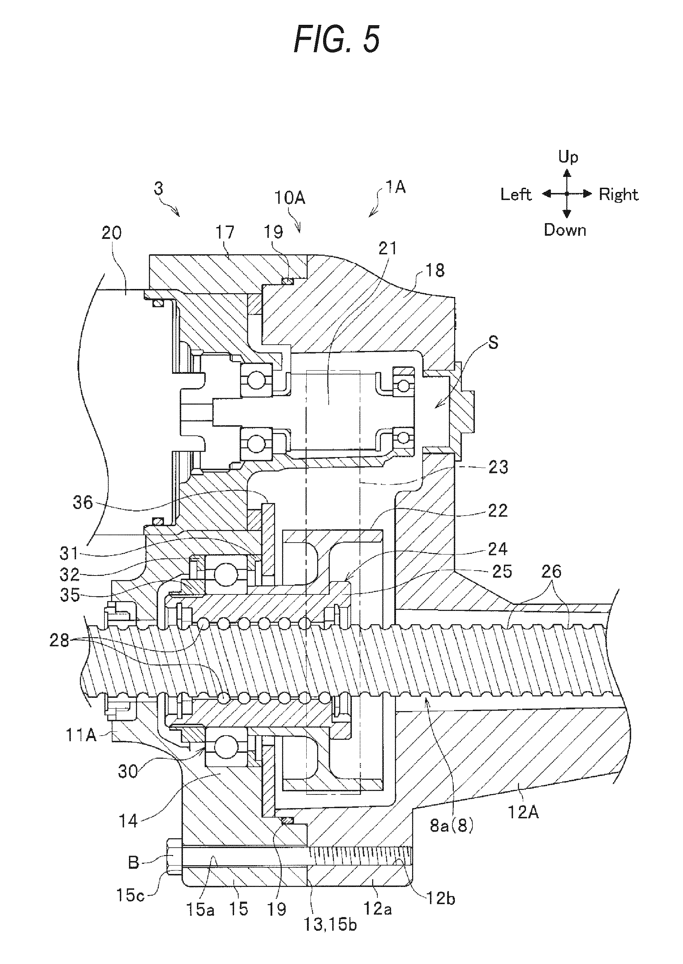

As illustrated in FIGS. 4 and 5, a housing 10A of a steering device 1A according to a second embodiment includes a gear case (first accommodation member) 11 A and a gear housing (second accommodation member) 12A. The first bearing 30 is internally fitted to an inner circumferential surface of the peripheral wall portion 14 of the gear case 11 A.

A fastening portion 15 which overlaps the entire length of the first bearing 30 in the axial direction of the rack shaft 8 and through which the bolt B passes is provided in the outer circumferential surface of the gear case 11A.

The motor fixing portion 17 is provided on the outer circumferential surface of the gear case 11A, and the motor 20 is attached to the motor fixing portion 17.

On the other hand, the junction portion 18 is formed on the outer circumferential surface in the left end portion of the gear housing 12A.

In such a steering device 1A, since the fastening portion 15 overlaps the entire length of the first bearing 30 in the axial direction of the rack shaft 8, it is possible to decrease the opening amount of the dividing surface 13 of the housing 10A without increasing the number of bolts B.

### <Third Embodiment>

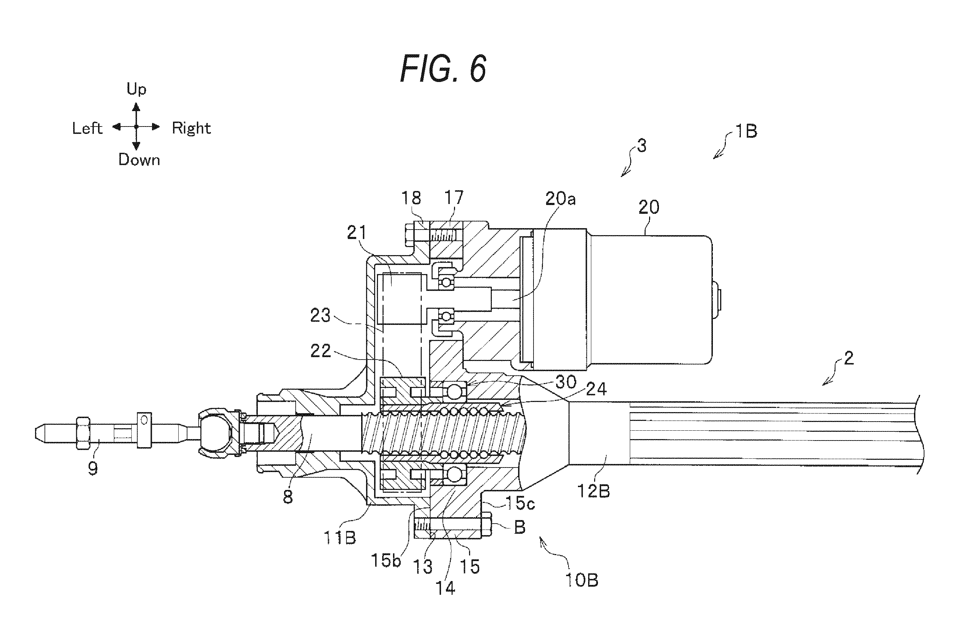

As illustrated in FIG. 6, a housing 10B of a steering device 1B according to a third embodiment includes a gear case (second accommodation member) 11B and a gear housing (first accommodation member) 12B.

The first bearing 30 is internally fitted to the inner circumferential surface of the peripheral wall portion 14 of the gear housing 12B.

The fastening portion 15 which overlaps the entire length of the first bearing 30 in the axial direction of the rack shaft 8 and through which the bolt B passes is provided on the outer circumferential surface of the gear housing 12B.

The motor fixing portion 17 is provided on the outer circumferential surface of the gear housing 12B and the motor 20 is attached to the motor fixing portion 17.

On the other hand, the junction portion 18 is formed on the outer circumferential surface in the right end portion of the gear case 11B.

In such a steering device 1B, since the fastening portion 15 overlaps the entire length of the first bearing 30 in the axial direction of the rack shaft 8, it is possible to decrease the opening amount of the dividing surface 13 of the housing 10B without increasing the number of bolts B.

### <Example>

Next, an example of a steering device will be described.

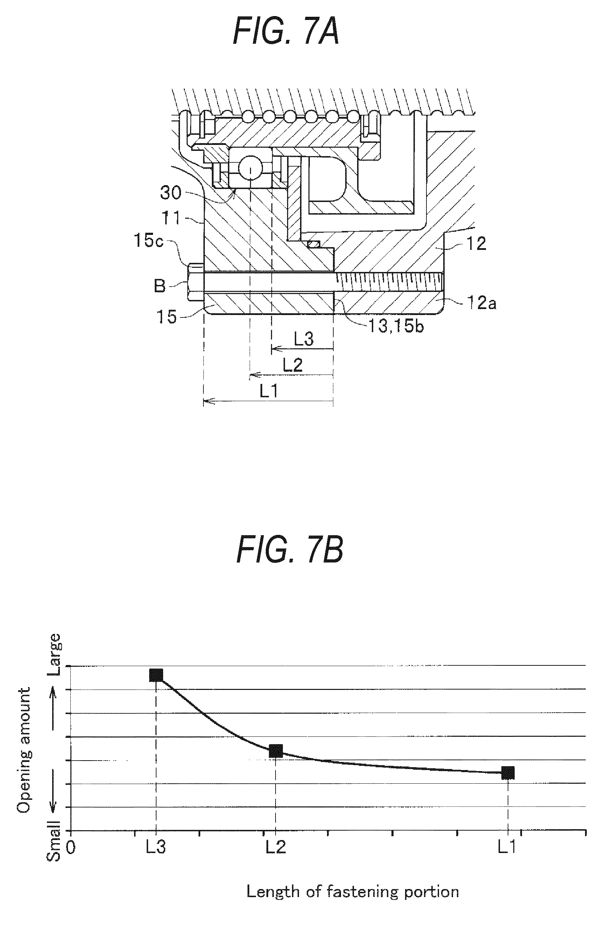

As illustrated in FIG. 7A, a steering device according to Example is the steering device 1 according to the first embodiment, in which the left end surface 15c of the fastening portion 15 is disposed closer to the left side than the first bearing 30 while extending over the first bearing 30, and the fastening portion 15 overlaps the entire length of the first bearing 30 in the axial direction of the rack shaft 8. The length in the axial direction of the fastening portion 15 is L1.

Comparative Examples (Comparative Examples 1 and 2) were prepared in order to verify the effects of Example.

As illustrated in FIG. 7A, the left end surface 15c of the fastening portion 15 of Comparative Example 1 is on the central line (the center in the left-right direction) of the first bearing 30 (see "L2" in FIG. 7A).

Thus, in Comparative Example 1, an overlapping amount of the fastening portion 15 and the first bearing 30 is smaller than that of the fastening portion 15 of Example and is half that of Example.

A left end surface 15c of a fastening portion 15 of Comparative Example 2 is on a right end surface of the first bearing 30 (see"L3" in FIG. 7A). Thus, the fastening portion 15 of Comparative Example 2 does not overlap the first bearing 30.

Thus, the overlapping amount of the fastening portion 15 and the first bearing 30 had a relation of Example > Comparative Example 1 > Comparative Example 2.

As illustrated in FIG. 7B, the opening amount of the dividing surface 13 had a relation of Example < Comparative Example 1 < Comparative Example 2. Thus, the larger the overlapping amount of the fastening portion 15 and the first bearing 30, the smaller the opening amount of the housing 10. The opening amount was the smallest in Example in which the fastening portion 15 overlaps the entire length of the first bearing 30.

## Claims

1. A steering device comprising:
a steering shaft;
a transmission member that transmits torque of a motor to the steering shaft;
an accommodation member that accommodates the steering shaft and the transmission member; and
a support member provided in the accommodation member and that supports the transmission member, wherein
the accommodation member includes a first accommodation member and a second accommodation member that are integrated by a fastening member,
the support member is provided in the first accommodation member,
a fastening portion through which the fastening member passes is formed in the first accommodation member, and
the fastening portion overlaps an entire length of the support member in an axial direction of the steering shaft.
